(19) **Europäisches Patentamt**
**European Patent Office**
**Office européen des brevets**

(11) **EP 3 007 447 A1**

(12) **EUROPEAN PATENT APPLICATION**
published in accordance with Art. 153(4) EPC

(43) Date of publication:
**13.04.2016 Bulletin 2016/15**

(51) Int Cl.:
**H04N 19/573** (2014.01)  **H04N 19/129** (2014.01)
**H04N 19/59** (2014.01)

(21) Application number: **14826877.4**

(22) Date of filing: **15.07.2014**

(86) International application number:
**PCT/KR2014/006405**

(87) International publication number:
**WO 2015/009039 (22.01.2015 Gazette 2015/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.07.2013 US 201361846416 P**
**22.07.2013 US 201361857053 P**
**12.09.2013 US 201361877115 P**
**14.10.2013 US 201361890641 P**
**18.04.2014 US 201414256858**

(71) Applicant: **Samsung Electronics Co., Ltd.**
**Gyeonggi-do 16677 (KR)**

(72) Inventors:
• **SAXENA, Ankur**
  **Dallas, Texas 75219 (US)**
• **FERNANDES, FelixCarlos**
  **Collin County, Texas 75025 (US)**
• **CHEN, Haoming**
  **Collin County, Texas 75082 (US)**

(74) Representative: **Appleyard Lees**
**15 Clare Road**
**Halifax HX1 2HY (GB)**

(54) **METHOD FOR IMPROVING INTRA-PREDICTION OF DIAGONAL MODE IN VIDEO CODING**

(57)    Provided is a video decoding method that includes operations of: identifying a directional intra prediction mode with an angle of prediction; identifying a first and second reference neighboring samples in a block of a video along the angle of prediction intersecting a pixel to be predicted; determining which of the first and second reference samples is nearest the angle of prediction; and applying a value of the nearest reference neighboring sample to the pixel as a predictor

FIG. 10

**Description**

**TECHNICAL FIELD**

The present application relates to a video encoding and decoding apparatus and, more particularly, to a method and apparatus for intra prediction for oblique modes in video coding and a transform selection for a particular class of Intra Block Copy mode.

**BACKGROUND ART**

Most existing image and video-coding standards such as JPEG, H.264/AVC, VC-1, and HEVC (High Efficiency Video Coding) employ block-based transform coding as a tool to efficiently compress an input image and video signals. The pixel domain data, after prediction, is transformed to the frequency domain using a transform process on a block-by-block basis. The better the prediction, the lesser the energy in the prediction residue, which will improve the compression efficiency of the video codec. Hence, it is necessary to devise optimal prediction coding schemes to minimize the energy in the residue and improve the compression efficiency of the video codec.

**DISCLOSURE OF INVENTION**

**TECHNICAL PROBLEM**

This disclosure provides a method and an apparatus for intra prediction improvements for oblique modes in video coding.

**TECHNICAL SOLUTION**

According to an aspect of the present disclosure, provided is a video decoding method, which includes operations of: identifying a directional intra prediction mode with an angle of prediction that intersects a pixel to be predicted; identifying a first and second reference neighboring samples in a block of a video along the angle of prediction; determining which of the first and second reference samples is nearest the angle of prediction; and applying a value of the nearest reference neighboring sample to the pixel as a predictor.
The video decoding method may further include an operation of determining a type of content. The value of the nearest reference neighboring sample may be applied to the pixel as the predictor responsive to the type of content being screen content.
The video decoding method may further include an operation of calculating a distance between the first and second reference samples. The value of the nearest reference neighboring sample may be applied to the pixel as the predictor responsive to the distance being greater than a threshold.
The video decoding method may further include operations of identifying a set of boundary pixels for the block, and calculating a variance of at least two of the boundary pixels. The value of the nearest reference neighboring sample may be applied to the pixel as the predictor responsive to the variance being less than a threshold.
The video decoding method may further include an operation of identifying a flag that indicates whether to use nearest neighbor interpolation method as a prediction method. The value of the nearest reference neighboring sample may be applied to the pixel as the predictor responsive to the flag indicating to use the nearest neighbor interpolation method.
The flag may indicate whether a sum of absolute difference in the nearest neighbor interpolation method is less than a sum of absolute difference in a bilinear interpolation method.
The flag may be unused in planar, DC, horizontal, and diagonal modes.
According to another exemplary embodiments, provided is a video decoding method, which includes operations of: determining whether a block type of a block of the video is intra block copy; determining a transform block size of the block responsive to the block type being the intra block copy; and applying discrete sine transform to the block responsive to the transform block size being 4x4.
The video decoding method may further include an operation of applying discrete cosine transform to the transform block responsive to the transform block size not being 4x4.
According to another aspect of the present disclosure, provided is a video decoder that includes processing circuitry configured to: identify a directional intra prediction mode with an angle of prediction intersecting a pixel to be predicted; identify a first and second reference neighboring samples in a block of a video along the angle of prediction; determine which of the first and second reference samples is nearest the angle of prediction; and apply a value of the nearest reference neighboring sample to the pixel as a predictor.

The processing circuitry may also be configured to determine a type of content. The value of the nearest reference neighboring sample may be applied to the pixel as the predictor responsive to the type of content being screen content.

The processing circuitry may also be configured to calculate a distance between the first and second reference samples. The value of the nearest reference neighboring sample may be applied to the pixel as the predictor responsive to the distance being greater than a threshold.

The processing circuitry may also be configured to identify a set of boundary pixels for the block and calculate a variance of at least two of the boundary pixels. The value of the nearest reference neighboring sample may be applied to the pixel as the predictor responsive to the variance being less than a threshold.

The processing circuitry may also be configured to identify a flag that indicates whether to use the nearest neighbor interpolation method as a prediction method. The value of the nearest reference neighboring sample may be applied to the pixel as the predictor responsive to the flag indicating to use the nearest neighbor interpolation method.

The flag may indicate whether a sum of absolute difference in the nearest neighbor interpolation method is less than a sum of absolute difference in a bilinear interpolation method.

The flag may be unused in planar, DC, horizontal, and diagonal modes.

According to another exemplary embodiments, provided is a video decoder that includes processing circuitry configured to: determine whether a block type of a block of a video is intra block copy; determine a transform block size of the block responsive to the block type being the intra block copy; and apply discrete sine transform to the block responsive to the transform block size being 4x4.

The processing circuitry may also be configured to apply discrete cosine transform to the transform block responsive to the transform block size not being 4x4.

## ADVANTAGEOUS EFFECTS

The present disclosure improves the intra prediction for oblique modes in the video coding.

## DESCRIPTION OF DRAWINGS

For a more complete understanding of the present disclosure and its advantages, reference is now made to the following description taken in conjunction with the accompanying drawings, in which reference numerals are added.

FIG. 1A illustrates a video encoder 100 according to embodiments of the present disclosure;
FIG. 1B illustrates a video decoder 150 according to embodiments of the present disclosure;
FIG. 1C illustrates a detailed view of a portion of the exemplary video encoder 100 according to embodiments of the present disclosure;
FIG. 2 illustrates intra prediction angles 200 according to embodiments of the present disclosure;
FIGS. 3A-3C illustrate prediction methods 301a-301c according to embodiments of the present disclosure;
FIGS. 4A- 4D illustrate prediction methods 401a-401d according to embodiments of the present disclosure;
FIG. 5 illustrates a bilinear-interpolation intra prediction method 500 according to embodiments of the present disclosure;
FIG. 6 illustrates a non-interpolation intra prediction method 600 according to embodiments of the present disclosure;
FIG. 7 illustrates a block 705 of natural content and a block 710 of screen content according to embodiments of the present disclosure;
FIGS. 8A and 8B illustrate a prediction unit 805 and a definition of intra prediction angle 810 according to embodiments of the present disclosure;
FIG. 9 illustrates an exemplary method 900 for applying a transform to a block according to embodiments of the present disclosure;
FIG. 10 illustrates an exemplary video decoding method 1000 according to embodiments of the present disclosure;
FIG. 11 illustrates an exemplary method 1100 for reading a flag to identify a prediction method according to embodiments of the present disclosure;
FIG. 12 illustrates an exemplary method 1200 for determining a prediction method according to embodiments of the present disclosure; and
FIG. 13 illustrates an exemplary method 1300 for determining a prediction method according to embodiments of the present disclosure.

## BEST MODE

A video decoding method includes operations of: identifying a directional intra prediction mode with an angle of prediction; identifying a first and second reference neighboring samples in a block of a video along the angle of prediction that intersects a pixel to be predicted; determining which of the first and second reference samples is nearest the angle of prediction; and applying a value of the nearest reference neighboring sample to the pixel as a predictor.

**MODE OF THE INVENTION**

Before undertaking the detailed description of the disclosure below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive and may mean and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: "A," "B," "C," "A and B," "A and C," "B and C," and "A, B and C."

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. The non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that, in many if not most instances, such definitions apply to prior as well as future uses of such defined words and phrases.

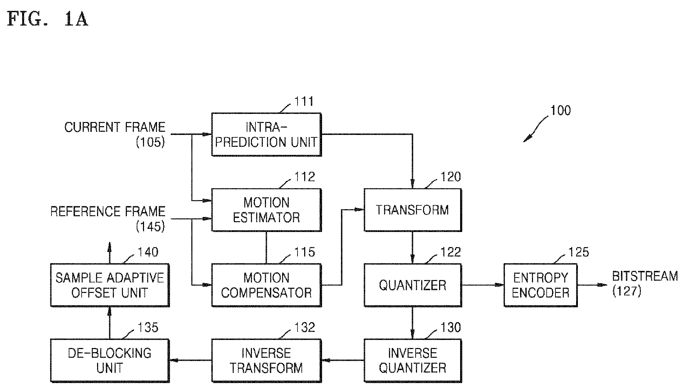

FIGS. 1A through 13, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication system. The wireless communication system may be referred to herein as the system. The system may include a video encoder and/or decoder.

FIG. 1A illustrates a video encoder 100 according to embodiments of the present disclosure. The embodiment of the encoder 100 shown in FIG. 1A is for illustration only. Other embodiments of the encoder 100 could be used without departing from the scope of this disclosure.

As shown in FIG. 1A, the encoder 100 may be based on a coding unit. An intra-prediction unit 111 may perform intra prediction on prediction units of an intra mode in a current frame 105. A motion estimator 112 and a motion compensator 115 may perform inter prediction and motion compensation, respectively, on prediction units of an inter-prediction mode using the current frame 105 and a reference frame 145. Residual values may be generated based on the prediction units output from the intra-prediction unit 111, the motion estimator 112, and the motion compensator 115. The generated residual values may be output as quantized transform coefficients by passing through a transform unit 120 and a quantizer 122.

The quantized transform coefficients may be reconstructed to residual values by passing through an inverse quantizer 130 and an inverse transform unit 132. The reconstructed residual values may be post-processed by passing through a de-blocking unit 135 and a sample adaptive offset unit 140 and output as the reference frame 145. The quantized transform coefficients may be output as a bitstream 127 by passing through an entropy encoder 125.

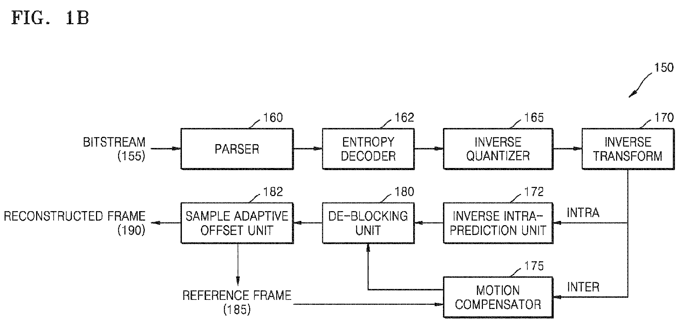

FIG. 1B illustrates a video decoder 150 according to embodiments of the present disclosure. The embodiment of the decoder 150 shown in FIG. 1B is for illustration only. Other embodiments of the decoder 150 could be used without departing from the scope of this disclosure.

As shown in FIG. 1B, the decoder 150 may be based on the coding unit. A bitstream 155 may pass through a parser 160 that parses encoded image data to be decoded and encoding information associated with decoding. The encoded image data may be output as inverse-quantized data by passing through an entropy decoder 162 and an inverse quantizer 165 and reconstructed to residual values by passing through an inverse transform unit 170. The residual values may be reconstructed according to rectangular block coding units by being added to an intra-prediction result of an intra-prediction unit 172 or a motion compensation result of a motion compensator 175. The reconstructed coding units may be used for prediction of next coding units or a next frame by passing through a de-blocking unit 180 and a sample adaptive offset unit 182. To perform decoding, components of the image decoder 150 such as the parser 160, the entropy decoder 162, the inverse quantizer 165, the inverse transform unit 170, the intra prediction unit 172, the motion compensator 175, the de-blocking unit 180, and the sample adaptive offset unit 182 may perform an image decoding process.

Each functional aspect of the encoder 100 and decoder 150 will now be described.

Intra-Prediction (units 111 and 172): Intra-prediction utilizes spatial correlation between frames to reduce the amount of transmission data necessary to represent images. An intra-frame is essentially a first frame to encode with a little amount of compression. Additionally, there may be some intra blocks in an inter frame. Intra-prediction is associated with making predictions within a frame, whereas inter-prediction relates to making predictions between frames.

Motion Estimation (unit 112): A fundamental concept in video compression is to store only incremental changes between frames when inter-prediction is performed. The differences between blocks in two frames may be extracted by a motion estimation tool. Here, a predicted block is reduced to a set of motion vectors and inter-prediction residues.

Motion Compensation (units 115 and 175): Motion compensation may be used to decode an image that is encoded by motion estimation. This reconstruction of an image is performed from received motion vectors and a block in a reference frame.

Transform/Inverse Transform (units 120, 132, and 170): A transform unit may be used to compress an image in inter-frames or intra-frames. One commonly used transform is Discrete Cosine Transform (DCT).

Quantization/Inverse Quantization (units 122, 130, and 165): A quantization stage may reduce the amount of information by dividing each transform coefficient by a particular number to reduce the quantity of possible values that each transform coefficient value could have. Because this makes the values fall into a narrower range, this allows entropy coding to express the values more compactly.

De-blocking and Sample adaptive offset units (units 135, 140, and 182): De-blocking may remove encoding artifacts due to block-by-block coding of an image. A de-blocking filter acts on boundaries of image blocks and removes blocking artifacts. A sample adaptive offset unit can minimize ringing artifacts.

In FIGS. 1A and 1B, portions of the encoder 100 and the decoder 150 are illustrated as separate units. However, this disclosure is not limited to the illustrated embodiments. Also, as shown here, the encoder 100 and decoder 150 include several common components. In some embodiments, the encoder 100 and the decoder 150 may be implemented as an integrated unit, and one or more components of an encoder may be used for decoding (or vice versa). Furthermore, each component in the encoder 100 and the decoder 150 could be implemented using any suitable hardware or combination of hardware and software/firmware instructions, and multiple components could be implemented as an integral unit. For instance, one or more components of the encoder 100 or the decoder 150 could be implemented in one or more field programmable gate arrays (FPGAs), application specific integrated circuits (ASICs), microprocessors, microcontrollers, digital signal processors, or a combination thereof.

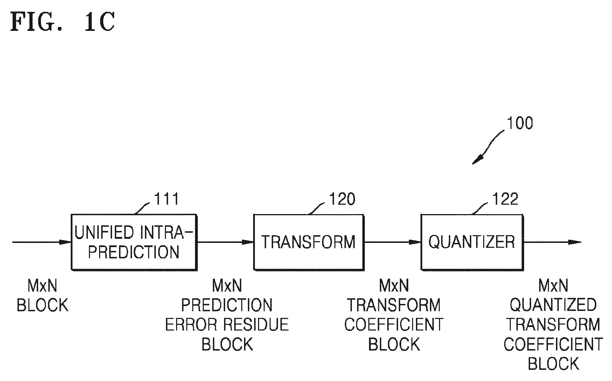

FIG. 1C illustrates a detailed view of a portion of the exemplary video encoder 100 according to this disclosure. The embodiment shown in FIG. 1C is for illustration only. Other embodiments of the encoder 100 could be used without departing from the scope of this disclosure.

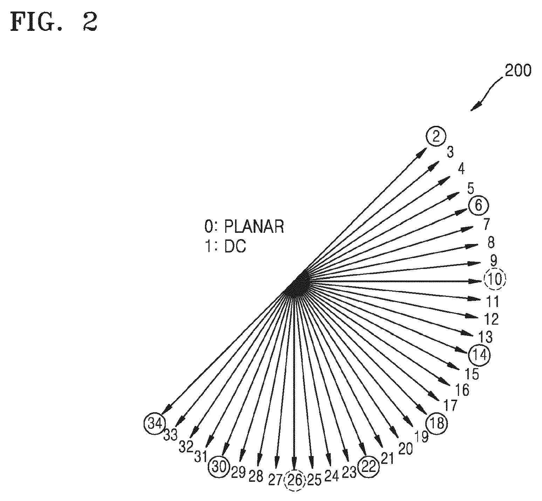

As shown in FIG. 1C, the intra prediction unit 111 (also referred to as a unified intra prediction unit 111) takes a rectangular MxN block of pixels as input and may predict these pixels using reconstructed pixels from blocks already constructed and a known prediction direction. In some implementations, the possible angles of prediction directions are illustrated in the unit 200 as shown in FIG. 2. However, these are merely examples, and the scope of this disclosure is not limited to these examples.

Following the prediction, the transform unit 120 may apply a transform in both the horizontal and vertical directions. The transform is followed by the quantizer 122, which reduces the amount of information by dividing each transform coefficient by a particular number to reduce the quantity of possible values that a transform coefficient could have. Because quantization makes the values fall into a narrower range, this allows entropy coding to express the values more compactly and aids in compression.

In the Range Extensions effort for the High Efficiency Video Coding (HEVC) being held in the ongoing JCTVC standardization, various techniques for high bit-depths (more than 8) for video sequences, lossless, and visually lossless coding, screen content coding, coding of video in different color planes, other than YUV, such as RGB etc. are being investigated.

Sample-based adaptive intra prediction (SAP) is a scheme for enhancing the prediction for a sample (pixel) by using a copy of the neighboring sample, or a linear combination of adjacent samples. In a JCTVC meeting held in April 2013, various tests on SAP were performed and test 4 from REF3 was adopted in the HEVC Range extensions software HM10.1+RExt3.0. REF4 asserts that applying SAP on non-horizontal and non-vertical oblique modes is not fully parallel in the decoder side in a hardware implementation, and SAP was adopted only for horizontal and vertical modes.

Thus, there is a need for a parallel implementation of oblique modes in the sample adaptive prediction framework so that coding gains can be increased, especially for screen content coding sequences.

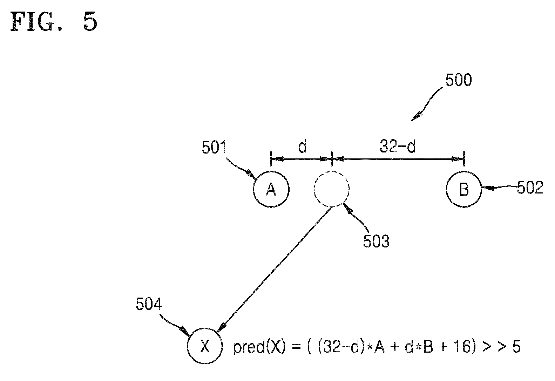

Next, in unified angular intra prediction method in HEVC, for some angular modes (other than strictly diagonal, horizontal, and vertical modes), bilinear interpolation of neighboring reference samples is used as the predictor for pixels as shown in FIG. 5 via a following equation:

$$\text{pred}(X) \ = \ ((32\text{-}d) * A \ + \ d*B \ + 16 \ ) \gg 5 \qquad\qquad (1)$$

This kind of smoothing scheme is suitable for natural video content since motion; noise and digital image sensor tends to smooth edges in such content.

However, for the computer-generated screen content or graphics content, the sharp edges are preserved, and therefore the traditional intra prediction scheme may not work efficiently for such content. Thus, there is a need for an improved prediction scheme for screen content coding.

The JCTVC is currently considering Range Extensions standardization for HEVC video codec REF1. Embodiments of the present disclosure improve upon the prior art by applying sample adaptive predictive coding (SAP) for oblique modes in unified angular prediction for both lossless and lossy scenario.

In certain embodiments of this disclosure, the prediction scheme can make SAP parallel for all the oblique modes at both the encoder and decoder. By overcoming the parallelism bottle-neck, significant gains can be achieved for the screen content video coding, and it would be less difficult to implement in hardware as well. Different embodiments of this disclosure provide methods and systems for both lossless and lossy scenarios.

One or more embodiments show an enhanced scheme for predicting screen-content coding by adaptively using the integer-pixels available for prediction, rather than performing bilinear interpolation to create the prediction. For computer-generated screen content or graphics content, sharp edges are preserved. Therefore, the smoothed intra prediction being performed for natural video sequences may not be suitable. To avoid this shortcoming, embodiments of the present disclosure adaptively disable the interpolation scheme in the intra prediction based on the variance of the reference samples. Different embodiments of this disclosure provide a proposed algorithm for both lossless and lossy scenarios.

SAP for Oblique Modes (Lossless setting)

FIG. 2 illustrates intra prediction angles 200 according to embodiments of the present disclosure. The embodiment of intra prediction angles 200 shown in FIG. 2 is for illustration only. Other embodiments of intra prediction angles 200 could be used without departing from the scope of this disclosure.

As shown in FIG. 2, the unified angular prediction (UAP) is shown for HEVC. The vertical mode 26 and horizontal mode 10 in HEVC were replaced with SAP in REF 4.

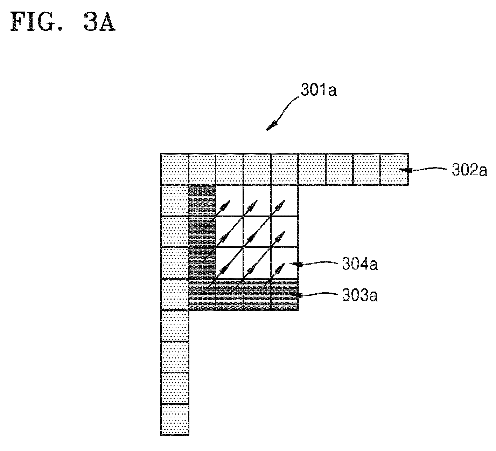

FIGS. 3A-3C illustrate prediction methods 301a-301c according to embodiments of the present disclosure. The prediction methods 301a-301c shown in FIGS. 3A-3C are for illustration only. Other embodiments of prediction methods 301a-301c could be used without departing from the scope of this disclosure.

FIG. 3A shows intra prediction method 301a with a diagonal mode 2. Pixels 302a are reference samples. Pixels 303a get the prediction as the standard HEVC intra prediction. Pixels 304a get the prediction from the integer-pixel position from its lower left samples for mode 2.

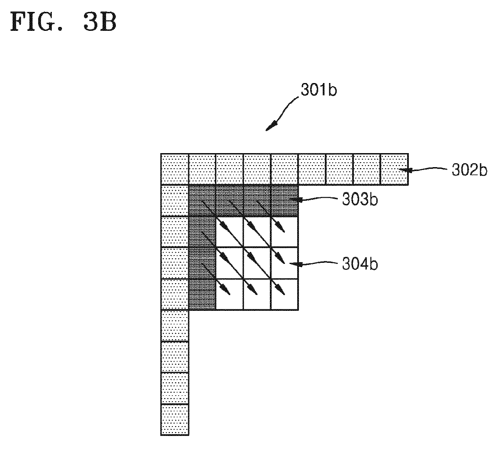

FIG. 3B shows intra prediction method 301b with diagonal mode. Pixels 302b are reference samples. Pixels 303b get the prediction as the standard HEVC intra prediction. Pixels 304b get the prediction from the integer-pixel position from its upper left samples for mode 18.

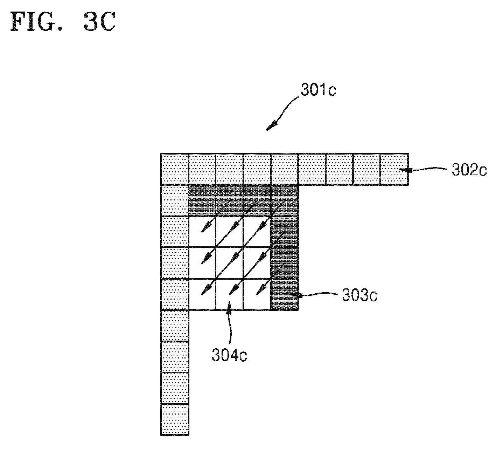

FIG. 3C shows intra prediction method 301c with diagonal mode 34. Pixels 302c are reference samples. Pixels 303c get the prediction as the standard HEVC intra prediction. Pixels 304c get the prediction from the integer-pixel position from its upper right samples for mode 34.

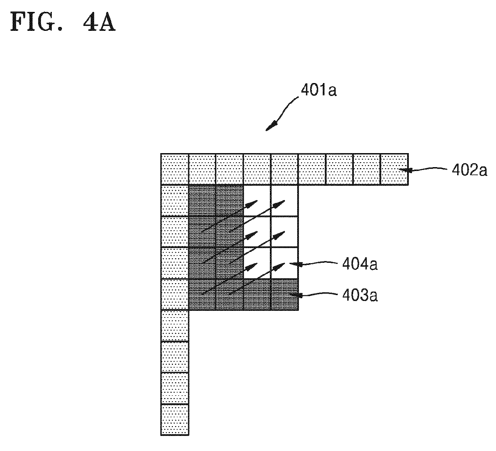

FIGS. 4A-4D illustrate prediction methods 401a-401d according to embodiments of the present disclosure. The prediction methods 401a-401d shown in FIGS. 4A-4D are for illustration only. Other embodiments of prediction methods 401a-401d could be used without departing from the scope of this disclosure.

FIG. 4A shows intra prediction method 401a with diagonal mode 6. Pixels 402a are reference samples. Pixels 404a get the prediction as the standard HEVC intra prediction. Pixels 403a get the prediction from samples along the angle of prediction of mode 6 as shown by the arrows.

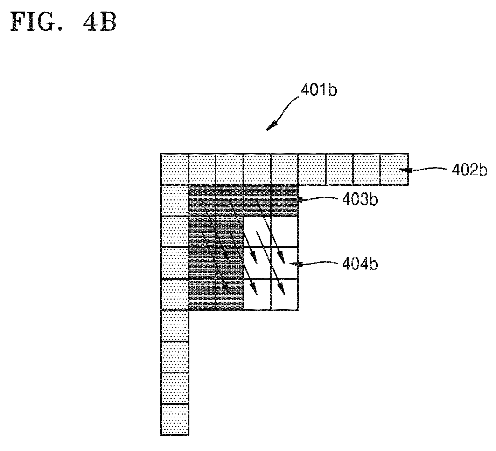

FIG. 4B shows intra prediction method 401b with diagonal mode 14. Pixels 402b are reference samples. Pixels 403b get the prediction as the standard HEVC intra prediction. Pixels 404b get the prediction from samples along the angle of prediction of mode 14 as shown by the arrows.

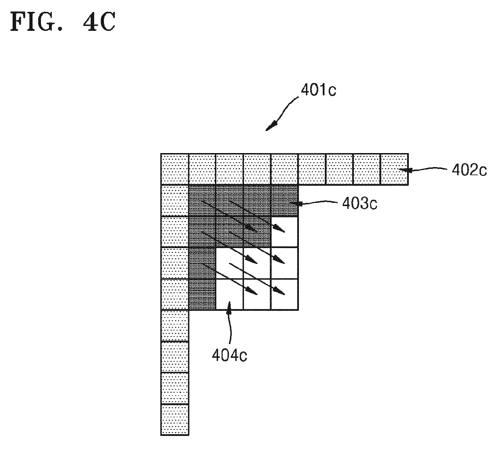

FIG. 4C shows intra prediction method 401c with diagonal mode 22. Pixels 402c are reference samples. Pixels 403c get the prediction as the standard HEVC intra prediction. Pixels 404c get the prediction from samples along the angle of prediction of mode 22 as shown by the arrows.

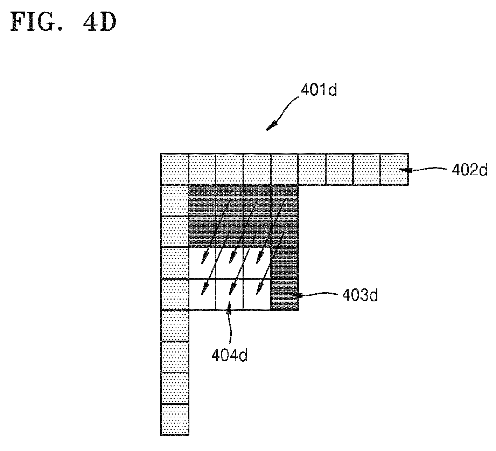

FIG. 4D shows intra prediction method 401d with diagonal mode 30. Pixels 402d are reference samples. Pixels 403d get the prediction as the standard HEVC intra prediction. Pixels 404d get the prediction from samples along the angle of prediction of mode 30 as shown by the arrows.

For a block of size M (rows) $\times$ N (cols), if the original pixel value is p(i,j), the derivation of a prediction function pred(i,j) is summarized in Table 1, where UAP denote the Unified Angular Prediction in HEVC standard (M=N for square blocks in HEVC).

Table 1: Derivation of predictor for proposed oblique SAP modes at encoder:

| Mode | Prediction Scheme at the encoder |
|---|---|
| 2 | $pred(i,j) = \begin{cases} p(i+1, j-1), & 0 \leq i \leq (M-2), 1 \leq j \leq (N-1) \\ \text{UAP}, & \text{otherwise} \end{cases}$ |
| 18 | $pred(i,j) = \begin{cases} p(i-1, j-1), & 1 \leq i \leq (M-1), 1 \leq j \leq (N-1) \\ \text{UAP}, & \text{otherwise} \end{cases}$ |
| 34 | $pred(i,j) = \begin{cases} p(i-1, j+1), & 1 \leq i \leq (M-1), 0 \leq j \leq (N-2) \\ \text{UAP}, & \text{otherwise} \end{cases}$ |
| 6 | $pred(i,j) = \begin{cases} p(i+1, j-2), & 0 \leq i \leq (M-2), 2 \leq j \leq (N-1) \\ \text{UAP}, & \text{otherwise} \end{cases}$ |
| 14 | $pred(i,j) = \begin{cases} p(i-1, j-2), & 1 \leq i \leq (M-1), 2 \leq j \leq (N-1) \\ \text{UAP}, & \text{otherwise} \end{cases}$ |
| 22 | $pred(i,j) = \begin{cases} p(i-2, j-1), & 2 \leq i \leq (M-1), 1 \leq j \leq (N-1) \\ \text{UAP}, & \text{otherwise} \end{cases}$ |
| 30 | $pred(i,j) = \begin{cases} p(i-2, j+1), & 2 \leq i \leq (M-1), 0 \leq j \leq (N-2) \\ \text{UAP}, & \text{otherwise} \end{cases}$ |

The algorithm may be extended to all the other oblique modes, i.e. for modes 2 to 32.

At the decoder, the decoding can be summarized as follows: (1) Decode the bit stream to get the residual of each sample. (2) For modes 18, 14, 22, 30 and 34, decode rows along the upper to bottom direction. For each sample along a row, follow the prediction scheme in Table 2 to get its predictor. (3) The reconstructed sample is the sum of the residual and the predictor: rec(i, j) = resi(i,j) + pred(i, j). In the lossless coding, the reconstructed sample is the same as original sample, i.e., rec(i,j) = p(i, j) in Table 2.

The system may repeat (2) and (3) until all samples within current block are reconstructed.

Table 2: Derivation of predictor for proposed oblique SAP modes at decoder

| Mode | Prediction Scheme at the decoder |
|---|---|
| 2 | $pred(i,j) = \begin{cases} p(i+1, j-1), & 0 \leq i \leq (M-2), 1 \leq j \leq (N-1) \\ \text{UAP}, & \text{otherwise} \end{cases}$ |

(continued)

| Mode | Prediction Scheme at the decoder |
|---|---|
| 18 | $$pred(i,j) = \begin{cases} p(i-1,j-1), & 1 \le i \le (M-1), 1 \le j \le (N-1) \\ \text{UAP}, & \text{otherwise} \end{cases}$$ |
| 34 | $$pred(i,j) = \begin{cases} p(i-1,j+1), & 1 \le i \le (M-1), 0 \le j \le (N-2) \\ \text{UAP}, & \text{otherwise} \end{cases}$$ |
| 6 | $$pred(i,j) = \begin{cases} p(i+1,j-2), & 0 \le i \le (M-2), 2 \le j \le (N-1) \\ \text{UAP}, & \text{otherwise} \end{cases}$$ |
| 14 | $$pred(i,j) = \begin{cases} p(i-1,j-2), & 1 \le i \le (M-1), 2 \le j \le (N-1) \\ \text{UAP}, & \text{otherwise} \end{cases}$$ |
| 22 | $$pred(i,j) = \begin{cases} p(i-2,j-1), & 2 \le i \le (M-1), 1 \le j \le (N-1) \\ \text{UAP}, & \text{otherwise} \end{cases}$$ |
| 30 | $$pred(i,j) = \begin{cases} p(i-2,j+1), & 2 \le i \le (M-1), 0 \le j \le (N-2) \\ \text{UAP}, & \text{otherwise} \end{cases}$$ |

Parallel Implementation for Oblique SAP Modes:

The prediction scheme for SAP can be parallelized at both the encoder and decoder. As an example, different embodiments of this disclosure show, for mode 30, how the implantation can be parallelized: For the upper 2 rows, and last column, no change from Unified Intra Prediction (UAP) is performed, and thus these pixels may be decoded in parallel as in HEVC. Next, for the remaining pixels, since the embodiments of this disclosure may have used only the integer-pixels for prediction, using SAP, the remaining pixels can be decoded in parallel as well. Note that, in REF2 and REF3, an interpolation was performed first for predicting the pixels, and hence if the prediction is coming from pixels inside the block to be coded denoted by set S, these pixels in set S first have to be reconstructed. Only after their reconstruction, the pixels in set S may be interpolated to form prediction for other pixels. This will cause a delay in predicting other pixels.

SAP for Oblique Modes (Lossy setting):

SAP for lossy setting for horizontal and vertical modes is presented in REF5. For the lossy setting, extension of lossless version presented in previous section is performed in the following fashion:

In certain embodiments, if after the prediction for a pixel p(i,j), the residue is r(i,j). The transform may be skipped, and the quantized residue may be given by $Q(r_{(i,j)})$, where Q denotes the quantization operation.

Then SAP for lossy setting for oblique modes is performed as:

| Mode | Step 3.a of the Prediction Scheme at the encoder |
|---|---|
| 2 | $$\tilde{r}_{i,j} = \begin{cases} r_{i,j} - Q(r_{(i+1),(j-1)}) & 0 \le i \le (M-2), 1 \le j \le (N-1) \\ r_{i,j}, & \text{otherwise} \end{cases}$$ |
| 18 | $$\tilde{r}_{i,j} = \begin{cases} r_{i,j} - Q(r_{(i-1),(j-1)}), & 1 \le i \le (M-1), 1 \le j \le (N-1) \\ r_{i,j}, & \text{otherwise} \end{cases}$$ |

(continued)

| Mode | Step 3.a of the Prediction Scheme at the encoder |
|---|---|
| 34 | $$\tilde{r}_{i,j} = \begin{cases} r_{i,j} - Q(r_{(i-1),(j+1)}), & 1 \le i \le (M-1), 0 \le j \le (N-2) \\ r_{i,j}, & \text{otherwise} \end{cases}$$ |
| 6 | $$\tilde{r}_{i,j} = \begin{cases} r_{i,j} - Q(r_{(i+1),(j-2)}), & 0 \le i \le (M-2), 2 \le j \le (N-1) \\ r_{i,j}, & \text{otherwise} \end{cases}$$ |
| 14 | $$\tilde{r}_{i,j} = \begin{cases} r_{i,j} - Q(r_{(i-1),(j-2)}), & 1 \le i \le (M-1), 2 \le j \le (N-1) \\ r_{i,j}, & \text{otherwise} \end{cases}$$ |
| 22 | $$\tilde{r}_{i,j} = \begin{cases} r_{i,j} - Q(r_{(i-2),(j-1)}), & 2 \le i \le (M-1), 1 \le j \le (N-1) \\ r_{i,j}, & \text{otherwise} \end{cases}$$ |
| 30 | $$\tilde{r}_{i,j} = \begin{cases} r_{i,j} - Q(r_{(i-2),(j+1)}), & 2 \le i \le (M-1), 0 \le j \le (N-2) \\ r_{i,j}, & \text{otherwise} \end{cases}$$ |

The modified residual sample $\tilde{r}_{i,j}$ is quantized to produce $Q(\tilde{r}_{i,j})$. Then, $Q(r_{i,j})$ is calculated as:

| Mode | Step 3.b of the Prediction Scheme at the encoder |
|---|---|
| 2 | $$Q(r_{i,j}) = \begin{cases} Q(\tilde{r}_{i,j}) + Q(r_{(i+1),(j-1)}) & 0 \le i \le (M-2), 1 \le j \le (N-1) \\ Q(\tilde{r}_{i,j}), & \text{otherwise} \end{cases}$$ |
| 18 | $$Q(r_{i,j}) = \begin{cases} Q(\tilde{r}_{i,j}) + Q(r_{(i-1),(j-1)}), & 1 \le i \le (M-1), 1 \le j \le (N-1) \\ Q(\tilde{r}_{i,j}), & \text{otherwise} \end{cases}$$ |
| 34 | $$Q(r_{i,j}) = \begin{cases} Q(\tilde{r}_{i,j}) + Q(r_{(i-1),(j+1)}), & 1 \le i \le (M-1), 0 \le j \le (N-2) \\ Q(\tilde{r}_{i,j}), & \text{otherwise} \end{cases}$$ |
| 6 | $$Q(r_{i,j}) = \begin{cases} Q(\tilde{r}_{i,j}) + Q(r_{(i+1),(j-2)}), & 0 \le i \le (M-2), 2 \le j \le (N-1) \\ Q(\tilde{r}_{i,j}), & \text{otherwise} \end{cases}$$ |
| 14 | $$Q(r_{i,j}) = \begin{cases} Q(\tilde{r}_{i,j}) + Q(r_{(i-1),(j-2)}), & 1 \le i \le (M-1), 2 \le j \le (N-1) \\ Q(\tilde{r}_{i,j}), & \text{otherwise} \end{cases}$$ |
| 22 | $$Q(r_{i,j}) = \begin{cases} Q(\tilde{r}_{i,j}) + Q(r_{(i-2),(j-1)}), & 2 \le i \le (M-1), 1 \le j \le (N-1) \\ Q(\tilde{r}_{i,j}), & \text{otherwise} \end{cases}$$ |
| 30 | $$Q(r_{i,j}) = \begin{cases} Q(\tilde{r}_{i,j}) + Q(r_{(i-2),(j+1)}), & 2 \le i \le (M-1), 0 \le j \le (N-2) \\ Q(\tilde{r}_{i,j}), & \text{otherwise} \end{cases}$$ |

The quantized modified residual samples $Q(\tilde{r}_{i,j})$ are then sent to the decoder. On the decoder side, the above calculations are repeated to produce $Q(r_{i,j})$, $0 \le i \le N$-1, $0 \le j \le N$-1. The quantized residuals are added to the original prediction values to produce reconstructed sample values.

In certain embodiment, for all the other oblique modes from 2 to 32, the extension to lossy setting from lossless SAP may be performed as shown for modes 2, 18, 34, 6, 14, 22, and 30 above.

FIG. 5 illustrates a bilinear-interpolation intra prediction method 500 according to embodiments of the present disclosure. The embodiment of method 500 shown in FIG. 5 is for illustration only. Other embodiments of method 500 could be used without departing from the scope of this disclosure.

Enhanced prediction for screen content coding:

As shown in FIG. 5, the method 500 is a bilinear interpolation of an angular intra prediction. The method 500 includes pixels 501-504. Pixel 504 (X) is a sample in a prediction unit (PU). Pixels 501 and 502 (A and B, respectively) are two neighboring reference samples along the angle of the prediction.

An embodiment of this disclosure pred(X) = ((32-d)\*A+(d\*B)+16) >> 5. In this embodiment, pixel 503 may be the predictor and used to predict the pixel X as shown in pixel 504. As an example, pixels 501 and 502 in FIG. 5 may be examples of reference neighboring samples. The angle of prediction is between pixels 501 and 502 at pixel 503. The pixel to be predicted is pixel 504.

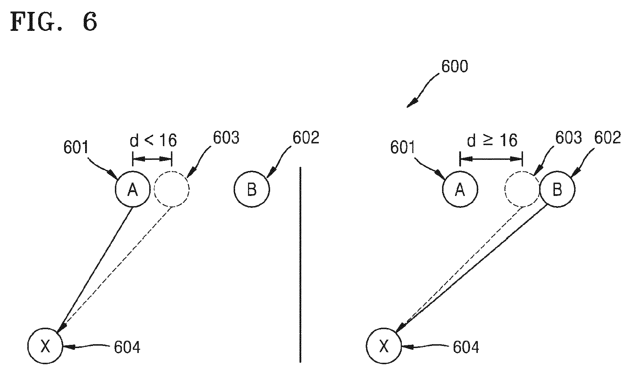

FIG. 6 illustrates a non-interpolation intra prediction method 600 according to embodiments of the present disclosure. The embodiment of method 600 shown in FIG. 6 is for illustration only. Other embodiments of method 600 could be used without departing from the scope of this disclosure.

As shown in FIG. 6, the method 600 includes pixels 601-604. An embodiment of this disclosure provides pred(X) = A if d < 16, otherwise B.

This method does not affect the horizontal, vertical and three diagonal modes since for these modes, the predictor may already be from the integral pixel position. In screen content, there are sharp edges, which do not generally exist in natural camera-captured video content.

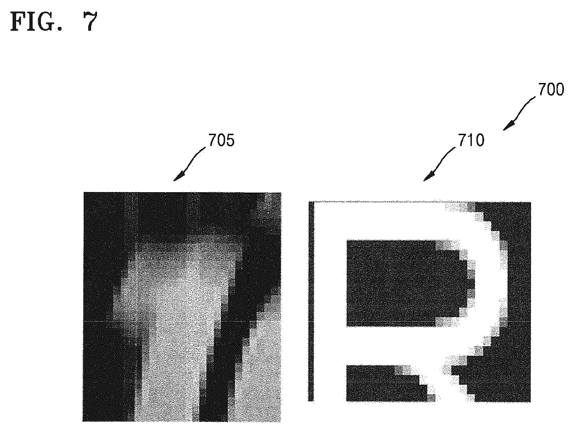

FIG. 7 illustrates a block 705 of natural content and a block 710 of screen content according to embodiments of the present disclosure. The embodiments of the blocks 705 and 710 shown in FIG. 7 are for illustration only. Other embodiments of the blocks 705 and 710 could be used without departing from the scope of this disclosure.

As shown in FIG. 7, for screen content, there are sharp edges, which do not generally exist in natural camera-captured video content. As an example, the block 710 shows that screen content has sharp edges and the block 705 of natural content does not have sharp edges.

In an embodiment, for the natural content, a strategy may be used to indicate whether the methods as described in embodiments herein should be applied.

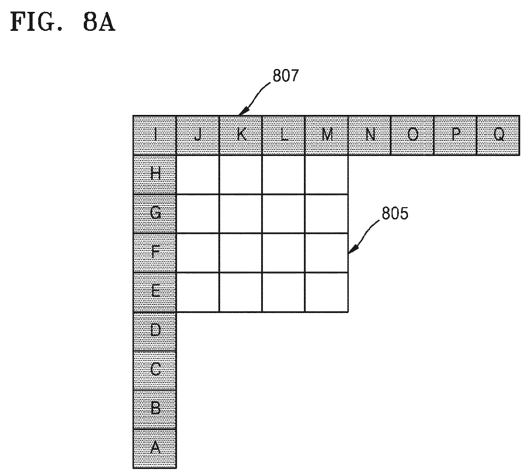

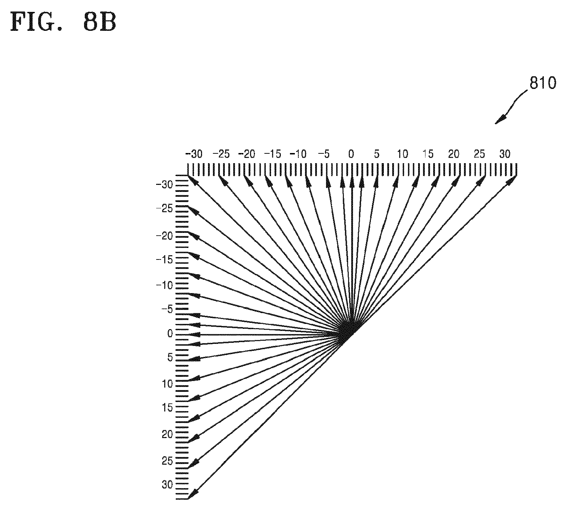

FIGS. 8A and 8B illustrate a prediction unit 805 and a definition of intra prediction angle 810 according to embodiments of the present disclosure. The embodiments of the prediction unit 805 and the definition of the intra prediction angle 810 as shown in FIG. 8A and 8B are for illustration only. Other embodiments of the prediction unit 805 and the intra prediction angle definition 810 could be used without departing from the scope of this disclosure.

In certain embodiments, the system may add additional intra prediction modes and perform a Rate-Distortion search at the encoder to choose the best prediction mode. In one of the exemplary embodiments, the skipping of bilinear interpolation filter is based on the variance of the reference samples 807 located outside upper or left edges of the current PU 805. As an example, an embodiment shows this process for a 4×4 PU in FIG. 8A.

In certain embodiments, for different modes, the variance may be determined as follows:

(1) If the angle is negative (i.e., prediction is performed from both the upper row and left column), i.e., HOR+1 ~ HOR+7 and VER-7 ~ VER-1, the variance of pixels E to M is calculated.

(2) If angle is positive and near vertical (i.e., prediction is performed from only the upper row), i.e., VER+1 ~ VER+7, variance of J to Q are calculated.

(3) If angle is positive and near horizontal (i.e., prediction is performed from only the left column), i.e., HOR-7 ~ HOR-1, the variance of A to H are calculated.

If variance is larger than 3000, the filter is skipped, otherwise, the bilinear filter is used. Note that the threshold 3000 is for 8 bits depth; for 10 bits depth, an embodiment may divide the original variance in 10-bits by 16 to normalize it with the variance threshold of 3000 for 8-bit video content.

The calculation of variance above is just one way of calculating the variance, and other different sets of pixels may be similarly used for calculating the variance. Also, different statistics other than variance, such as block strength in deblocking filter, may be used. The threshold of 3000 may also be changed to another value.

Also, the above scheme of skipping the interpolation for screen content may be performed for all the blocks, and may be signaled in Sequence Picture Set (SPS), PPS, or the like, depending on whether the content is screen content etc. Finally, the enhanced scheme may be applied to a sub-set of prediction modes only (for example only even modes, or only odd modes and the like).

Next, certain embodiments may enumerate different other methods that may be used instead of the variance-based selection to determine whether to use a nearest neighbor interpolation method, or to retain the bilinear interpolation from HEVC. The nearest neighbor interpolation method may be an example of the method 500 and/or 600 as shown in FIGS. 5 and 6.

Certain embodiments may use a very simplistic "threshold" between two neighboring pixels to decide whether to use bilinear interpolation. For example a system may use the following criteria for deciding for the predictor of pixel X:

```
if (abs (A-B) > thr )
    if d < 16
                prediction(X) = A
else
                prediction (X) = B
else
retain bilinear interpolation method from HEVC for prediction of pixel X.
```

In the above, "abs" denotes the absolute value, and "thr" is some threshold, for example, 120, or 128, 150, and the like. For an 8-bit video sequence, "thr" lies between 0 and 255 (range of 8-bit samples). For 10-bit video sequences, the threshold may be appropriately multiplied by 4 (for example, "thr" of 128 for an 8-bit video sequence corresponds to 512 for a 10-bit video sequence and the like).

In certain embodiments, a system may use more than 2 pixels above in comparison against threshold. For example, the system may use one or more neighboring samples of pixels A and B during comparison of the threshold.

In certain embodiments, a system may use the neighboring samples to A and B from the upper row (or corresponding left column in case prediction is happening from left column) in the calculation of statistics other than variance.

Also, a system may use sum of absolute values, instead of variance as a statistic.

In general, screen content has a few different intensity values. In an embodiment, a system may create a histogram of the intensity values of the pixel samples from the upper row (in case prediction is from the upper row), and then decide if there are only two or three different intensity values, the content is most likely screen-content, and then use the nearest neighbor interpolation method rather than HEVC method for the current block.

Also, in certain embodiments, a system may create a "quantized" histogram instead of a histogram. A quantized histogram is defined as quantizing the pixel values. For example, a 4 point quantized histogram has boundaries 64, 128, 192 for an 8-bit video. Therefore, pixels will be quantized to 32, 96, 160 and 224. If there is only one intensity level, the content may be natural content, and the system may use the HEVC method for prediction. If there are two different intensity levels, then the content is screen-content.

In some embodiments, there may be some errors when the pixels lie near the quantization boundaries. Additional tests may be done, and quantization boundaries may be modified, by example dithering, or the quantization offset may be sent to the decoder and the like.

In addition, the difference between consecutive pixels in the upper row from where the prediction is happening. Let the original pixels in the upper row be A, B, C, ..., H. Therefore, the difference of pixels is defined as a= abs (A-B); b = abs( B- C );... g =abs (G-H). In certain embodiments, the system may perform some operations on these differences a, b, ..., g; such as computing their average, or variance, and then deciding whether to use nearest neighbor interpolation for enhanced prediction, or retain HEVC method for prediction.

In a similar vein of not using bilinear interpolation for oblique modes, mode-dependent filtering for intra prediction modes may also be switched off for screen-content video; or adaptively switched off for some blocks. In addition, combination of adaptive disabling of mode-dependent filtering, and enhanced prediction as presented above may be straightforwardly performed by using entities such as variance information as shown above.

Enhanced prediction for screen content coding using Rate-Distortion:

Rate-distortion-optimized search may be used in any of the embodiments disclosed herein. At the encoder side, both the bilinear interpolation and the non-interpolation methods are tested for each mode, and their Sum of Absolute Difference (SAD) cost is computed. The best mode out of bilinear interpolation (coming from oblique mode) and the proposed nearest neighbor intra mode combination, which results in the minimum rate-distortion cost, may be selected at the encoder. To indicate the type of mode used at the decoder side, one flag is included in the bit stream for each (interpolation, nearest neighbor intra mode) combination. To speed up the search process and save bit, following things can be done:

Skip the search between choosing the normal HEVC mode, and proposed nearest neighbor prediction mode for the Planar, DC, Horizontal, Vertical and three diagonal modes, since for these modes, no bilinear interpolation is performed. Since the intra mode information is derived prior to interpolation information in the decoder side, no extra bit (flag) is needed for the Planar, DC, Horizontal, Vertical and three diagonal modes.

For the chroma components, the same interpolation may be used as corresponding luma component, when the "derived mode" (same as luma intra mode) is selected. In certain embodiments, no extra flag is needed for chroma components to distinguish between the bilinear interpolation mode as in HEVC, or proposed nearest neighbor prediction mode.

Restricting the proposed intra prediction on only 4×4, or 4x4 and 8x8 blocks (subset of blocks), hence the interpolation search on larger block size may be skipped and signaling bits can be reduced.

When encoding the flag of interpolation, a syntax adaptive binary arithmetic coding (SBAC) method may be used. To further improve the coding efficiency of the flag, the context of the SBAC can be predicted from the upper coding unit and the left coding unit, which have been encoded already.

For the initialization of the contexts for the "flag" for enhanced intra prediction, the following table may be used as initialization for various frames (0 is Intra; 1 is normal Inter P frame; and 2 is Bi-directional B Inter frame).

Table 3 - Initial Values for Context Index of Previous Luma Prediction Mode

| Initialization variable | Context Index of Previous Luma Prediction Mode | | |
|---|---|---|---|
| | 0 | 1 | 2 |
| Initial Value | 184 | 154 | 183 |

Other non-zero values of in it Value may also be used to initialize the contexts.

Beside the bilinear and the nearest neighbor interpolation, some other interpolation methods may also be applied in the intra prediction. For example, the average value of two reference samples instead of nearest neighbor pixel, or only the left pixel for prediction, and similarly for all other pixels in the block, use only left pixel which was being used originally in bilinear interpolation), and similarly the right pixel, and so on.

The method can be applied selectively on difference types of frames. For example, in an embodiment, this method may be applied on Intra frame only, and not necessarily on Inter frames.

In an embodiment, at the encoder, this method may only be applied when the bilinear intra prediction is better than the inter prediction, in which way the proposed method will not affect the inter block coding.

Enhanced prediction for screen content with LM Chroma mode:

In REF7, an LM Chroma scheme is proposed for predicting Chroma component in the video. The Chroma prediction for a pixel X may be calculated as follows:

$$[150] \quad X_{Pred}(\text{Chroma, new}) = \alpha X_{Pred}(\text{Chroma, org}) + \beta X_{Pred}(\text{Luma, org})$$

where $X_{Pred}$(Chroma, org) and $X_{Pred}$(Luma, org) are the pixels used originally for prediction of pixel X (for example, reconstructed pixels before from the boundary). In an embodiment with bilinear interpolation, these predictions can be:

$$X_{Pred}(\text{Chroma, org}) = \mu A_{Chroma} + (1\text{-}\mu)B_{Chroma}$$

and

$$X_{Pred}(\text{Luma, org}) = \mu A_{Luma} + (1\text{-}\mu)B_{Luma}$$

where $A_{Chroma}$ and $B_{Chroma}$ are respectively the Chroma pixels from which bilinear interpolation is performed. Similarly, $A_{Luma}$ and $B_{Luma}$ are the Luma pixels from which bilinear interpolation is performed.

In certain embodiments, to perform enhanced intra prediction for pixel X, and assuming $A_{Chroma}$ is nearer to it than $B_{Chroma}$, and therefore the nearest neighbor (amongst the pixels from which can be predicted), the equation for LM Chroma prediction can be:

$$X_{Pred}(\text{Chroma, new}) \quad = \quad \alpha A_{Chroma} + \beta A_{Luma},$$

where the system uses nearest-neighbors for prediction. In the rate-distortion search for enhanced prediction in LM chroma search, the above prediction would be used as a candidate predictor at the encoder for Chroma components. For Luma components, there may not be any change (unless Luma is also predicted using a combination of Luma, and Chroma).

SAP for Intra Block Copy mode:

For Intra Block Copy (Intra BC) mode, one or more embodiments also provide using SAP for Intra BC copy. For example, in the residual block, after subtracting the Intra BC block at the encoder from current block, the system may perform a Rate-Distortion search (similar to being done for Inter blocks) and choose whether horizontal, or vertical SAP would be beneficial.

In certain embodiments, the system may directly apply SAP in vertical direction, if the motion vector coming from the Intra_BC block is in vertical (or horizontal) direction. SAP along horizontal direction may be applied in an analogous way.

DST for Intra Block Copy modes:

For Intra Block Copy (Intra BC) mode, currently at size 4x4 TU, DCT is used. In certain embodiments, the system always may use 4x4 DST for 4x4 Intra_BC block. The system may not use 4x4 DCT for Luma for an all intra profile. This can be viewed as a simplification, since for an All Intra profile, 4x4 DCT can be eliminated for Luma.

In certain embodiments, the system may use DST and DCT selectively. If the prediction for Intra BC is from horizontal direction only, then the system may use DST as the horizontal transform, and DCT as the vertical transform. Similarly, if the prediction is from a vertical direction, then the system may use DST as the vertical transform, and DCT as the horizontal transform. In one or more embodiments, an opposite scheme where DCT and DST are reversed may also be applied.

In an embodiment, the system may use 4x4 DST for 4x4 Intra_BC block only when the frame is Intra. The system may not use 4x4 DCT for Luma for an all intra profile. In some embodiments, for Inter frames, the system may still use DCT as the 4x4 transform for Luma for Intra_BC blocks.

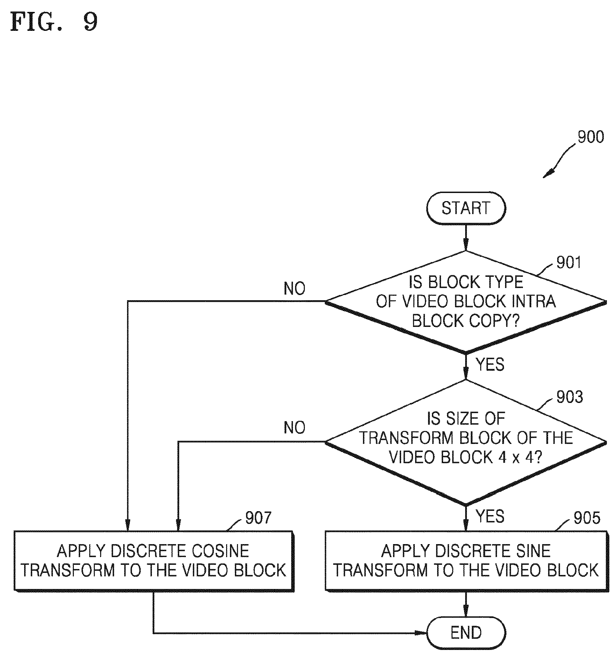

FIG. 9 illustrates an exemplary method 900 for applying a transform to a block according to embodiments of the present disclosure. The decoder may represent the decoder 150 shown in FIG. 1B. The embodiment of the method 900 shown in FIG. 8 is for illustration only. Other embodiments of the method 900 could be used without departing from the scope of this disclosure.

In operation 901, the decoder determines whether a block type of a block of the video is intra block copy. If the block type is intra block copy, then in operation 903, the decoder determines whether a transform block size of the block is 4x4. If the transform block size is 4x4, then in operation 905 the decoder applies a discrete sine transform to the block.

If in operation 901 or 903, the result is no, then the decoder, in operation 907, applies a discrete cosine transform to the block.

One or more embodiments of the present disclosure may be applied to inter-prediction and combined intra and inter prediction in video coding. It is applicable to any coding/compression scheme that uses predictive and transform coding.

One or more embodiments of the present disclosure may be applied to rectangular block sizes of different width and height as well as to non-rectangular region of interest coding in video compression such as for short distance intra prediction.

One or more embodiments of the present disclosure may be applied to only a subset of few PU's. For example, SAP in REF2 and REF3 is applied to PU's of size 4x4, 8x8, 16x16, 32x32 and 64x64. Embodiments of the present disclosure may only be applied to a subset of these PU's, for example, to size 4x4, and 8x8 PU's and the like.

Embodiments of the present disclosure will improve the coding efficiency and reduce computational complexity of range extensions for HEVC proposal, and will be a strong contender for standardization in range extensions of the HEVC standard.

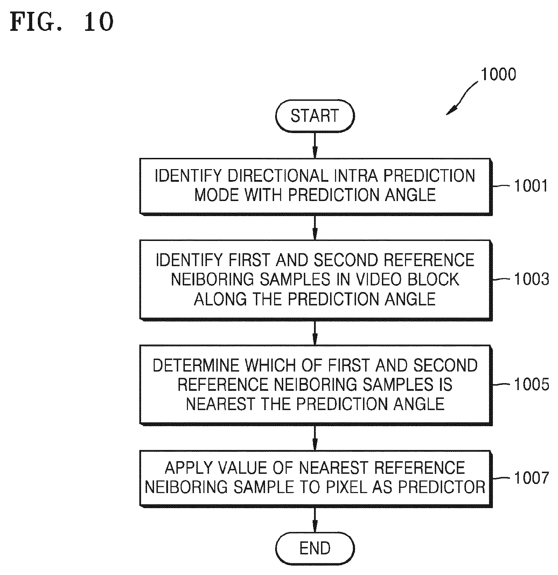

FIG. 10 illustrates an exemplary video decoding method 1000 according to embodiments of the present disclosure. The decoder may represent the decoder 150 shown in FIG. 1B. The embodiment of the method 1000 shown in FIG. 10 is for illustration only. Other embodiments of the method 1000 could be used without departing from the scope of this disclosure.

In operation 1001, the decoder identifies a directional intra prediction mode with an angle of prediction. The mode, for example, could be any from 0-34 as shown in FIG. 2. The angle of prediction may be the one specified by the direction intra prediction mode. For example, direction intra prediction mode 20 shown in FIG. 2 may indicate an angle of prediction going towards the bottom-left.

In operation 1003, the decoder identifies a first and second reference neighboring samples in a block of the video along the angle of prediction; the angle of prediction intersects a pixel to be predicted.

In operation 1005, the decoder determines which of the first and second reference samples is nearest the angle of prediction. In operation 100, the decoder applies a value of the nearest reference neighboring sample to the pixel as a predictor.

In certain embodiments, before operation 1007, the decoder determines a type of content. The decoder may apply the value of the nearest reference neighboring sample to the pixel as the predictor in response to the type of content being screen content.

In certain embodiments, before operation 1007, the decoder calculates a distance between the first and second reference samples. The decoder may apply the value of the nearest reference neighboring sample to the pixel as the predictor in response to the distance being more than a threshold. The threshold may be predetermined or changed dynamically.

In certain embodiments, before operation 1007, the decoder identifies a set of boundary pixels for the block and calculates a variance of at least some of the boundary pixels. The decoder may apply the value of the nearest reference neighboring sample to the pixel as the predictor in response to the distance being less than a threshold. The threshold may be predetermined or changed dynamically.

In certain embodiments, the decoder identifies a flag that indicates whether to use nearest neighbor interpolation method as a prediction method. The decoder may apply the value of the nearest reference neighboring sample to the pixel as the predictor in response to the flag indicating to use the nearest neighbor interpolation method. The encoder may use multiple prediction methods and choose the best prediction method. The encoder may use a flag to indicate which prediction method is used.

In certain embodiments, the flag indicates whether a sum of absolute difference of the nearest neighbor interpolation method is less than a sum of absolute difference of a bilinear interpolation method. In an embodiment, the flag is not used in planar, DC, horizontal, and diagonal modes.

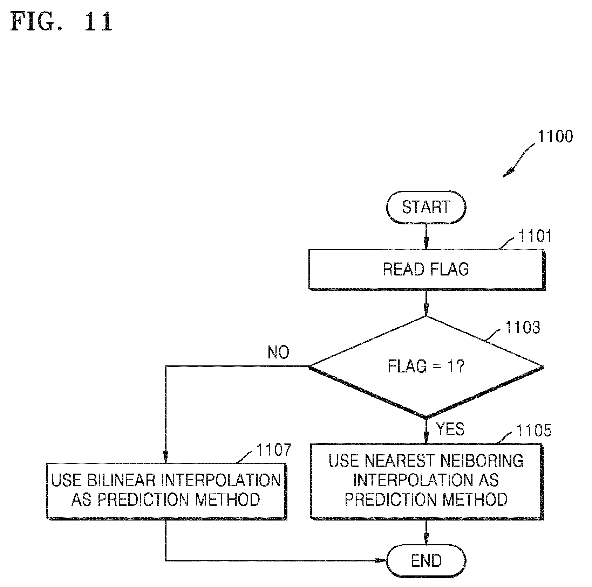

FIG. 11 illustrates an exemplary method 1100 for reading a flag to identify a prediction method according to embodiments of the present disclosure. The decoder may represent the decoder 150 shown in FIG. 1B. The embodiment of the method 1100 shown in FIG. 9 is for illustration only. Other embodiments of the method 1100 could be used without departing from the scope of this disclosure.

In operation 1101, the decoder reads a flag. The flag may be used by the encoder. The encoder may use multiple methods to identify the most efficient and then use that method.

In operation 1103, the decoder determines if the flag is set to 1. The flag may be active when it is set to "1" or, in other embodiments, "0." The values may be changed in different embodiments so that the flag is active at 0. If the flag is 1, then in operation 1105, the decoder may use nearest neighbor interpolation as the prediction method. If the flag is 0, then in operation 1107, the decoder may use bilinear interpolation as the prediction method.

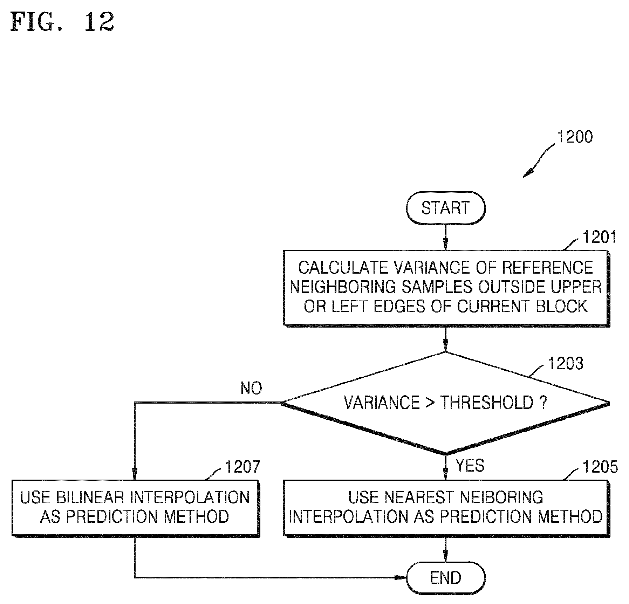

FIG. 12 illustrates an exemplary method 1200 for determining a prediction method according to embodiments of the present disclosure. The decoder may represent the decoder 150 shown in FIG. 1B. The embodiment of the method 1200 shown in FIG. 12 is for illustration only. Other embodiments of the method 1200 could be used without departing from the scope of this disclosure.

In operation 1201, the decoder calculates a variance of reference neighboring samples outside upper or left edges of the current block. In operation 1203, the decoder determines if the variance is greater than a threshold. If the variance is greater than the threshold, then in operation 1205, the decoder uses nearest neighbor interpolation as the prediction method. If the variance is not greater than the threshold, then at 1207, the decoder may use bilinear interpolation as the prediction method.

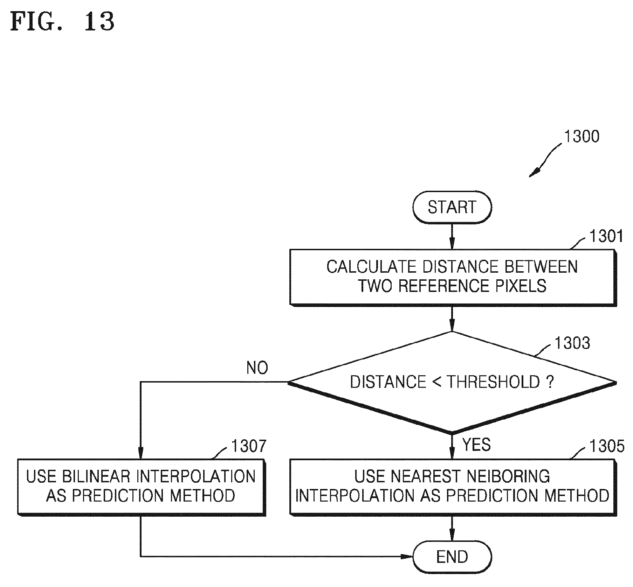

FIG. 13 illustrates an exemplary method 1300 for determining a prediction method according to embodiments of the present disclosure. The decoder may represent the decoder 150 shown in FIG. 1B. The embodiment of the method 1300 shown in FIG. 13 is for illustration only. Other embodiments of the method 1300 could be used without departing from the scope of this disclosure.

In operation 1301, the decoder calculates a distance between two reference pixels. In operation 1303, the decoder determines if the distance is less than a threshold. If the distance is less than the threshold, then in operation 1305, the decoder uses nearest neighbor interpolation as the prediction method. If the distance is not less than the threshold, then at 1307, the decoder may use bilinear interpolation as the prediction method.

While the methods 900-1300 are described with only using a decoder, it will be understood that the methods 900-1300 can be extended to additional devices, including decoders.

The following documents and standards descriptions are hereby incorporated into the present disclosure as if fully set forth herein:

REF1 - D. Flynn, J. Sole, and T. Suzuki, "HEVC range extensions draft 3", JCTVC-M1005, Incheon, South Korea, April 2013;

REF2 - M. Zhou, "AHG22: Sample-based angular prediction (SAP) for HEVC lossless coding," JCTVC-G093, Geneva, Switzerland, Nov 2011;

REF3 - M. Zhou, and M. Budagavi, "RCE2: Experimental results on Test 3 and Test 4", JCTVC-M0056, Incheon, Korea, April 2013;

REF4 - R. Joshi, P. Amon, R. Cohen, S. Lee and M. Naccari, "HEVC Range Extensions Core Experiment 2 (RCE2): Prediction and coding techniques for transform-skip and transform-bypass blocks," JCTVC-M1122, Incheon, Korea, April 2013;

REF5 - R. Joshi, J. Sole, and M. Karczewicz, "AHG8: Residual DPCM for visually lossless coding", JCTVC-M0351, Incheon, Korea, April 2013;

REF6 - R. Joshi, J. Sole, and M. Karczewicz, "Non-RCE2: Extension of residual DPCM for lossless coding", JCTVC-M0288, Incheon, Korea, April 2013; and

REF7 - W. Pu, W. S. Kim, J. Chen, K. Rapaka, L. Guo, J. Sole, M. Karczewicz, "Non RCE1: Inter Color Component Residual Prediction", JCTVC-N0266, Vienna, Austria, July 2013.

Although the present disclosure has been described with an exemplary embodiment, various changes and modifications may be suggested to one skilled in the art. It is intended that the present disclosure encompass such changes and modifications as fall within the scope of the appended claims.

**Claims**

1. A video decoding method, comprising:

    identifying a directional intra prediction mode with an angle of prediction;
    identifying a first and second reference neighboring samples in a block of a video along the angle of prediction, the angle of prediction intersects a pixel to be predicted;
    determining which of the first and second reference samples is nearest the angle of prediction; and
    applying a value of the nearest reference neighboring sample to the pixel as a predictor.

2. The method of claim 1, further comprising:

    determining a type of content,
    wherein the value of the nearest reference neighboring sample is applied to the pixel as the predictor responsive to the type of content being screen content.

3. The method of claim 1, further comprising:

    calculating a distance between the first and second reference samples,
    wherein the value of the nearest reference neighboring sample is applied to the pixel as the predictor responsive to the distance being greater than a threshold.

4. The method of claim 1, further comprising:

    identifying a set of boundary pixels for the block; and
    calculating a variance of at least two of the boundary pixels,
    wherein the value of the nearest reference neighboring sample is applied to the pixel as the predictor responsive to the variance being less than a threshold.

5. The method of claim 1, further comprising:

    identifying a flag that indicates whether to use nearest neighbor interpolation method as a prediction method,
    wherein the value of the nearest reference neighboring sample is applied to the pixel as the predictor responsive to the flag indicating to use the nearest neighbor interpolation method.

6. The method of claim 5, wherein the flag indicates whether a sum of absolute difference in the nearest neighbor interpolation method is less than a sum of absolute difference in a bilinear interpolation method.

7. The method of claim 5, wherein the flag is not used in planar, DC, horizontal, and diagonal modes.

8. A video decoding method, comprising:

determining whether a block type of a block of a video is intra block copy;
responsive to the block type being the intra block copy, determining a transform block size of the block; and
responsive to the transform block size being 4x4, applying discrete sine transform to the block.

9. The method of claim 8, further comprising:

responsive to the transform block size not being 4x4, applying discrete cosine transform to the transform block.

10. A video decoder comprising:

processing circuitry configured to:

identify a directional intra prediction mode with an angle of prediction;
identify a first and second reference neighboring samples in a block of a video along the angle of prediction, the angle of prediction intersects a pixel to be predicted;
determine which of the first and second reference samples is nearest the angle of prediction; and
apply a value of the nearest reference neighboring sample to the pixel as a predictor.

11. The video decoder of claim 10, the processing circuitry is further configured to:

determine a type of content,
wherein the value of the nearest reference neighboring sample is applied to the pixel as the predictor responsive to the type of content being screen content.

12. The video decoder of claim 10, the processing circuitry is further configured to:

calculate a distance between the first and second reference samples,
wherein the value of the nearest reference neighboring sample is applied to the pixel as the predictor responsive to the distance being greater than a threshold.

13. The video decoder of claim 10, the processing circuitry is further configured to:

identify a set of boundary pixels for the block; and
calculate a variance of at least two of the boundary pixels,
wherein the value of the nearest reference neighboring sample is applied to the pixel as the predictor responsive to the variance being less than a threshold.

14. The video decoder of claim 10, the processing circuitry is further configured to:

identify a flag that indicates whether to use nearest neighbor interpolation method as a prediction method,
wherein the value of the nearest reference neighboring sample is applied to the pixel as the predictor responsive to the flag indicating to use the nearest neighbor interpolation method.

15. The video decoder of claim 14, wherein the flag indicates whether a sum of absolute difference in the nearest neighbor interpolation method is less than a sum of absolute difference in a bilinear interpolation method.

FIG. 1A

FIG. 1B

BITSTREAM (155) → PARSER (160) → ENTROPY DECODER (162) → INVERSE QUANTIZER (165) → INVERSE TRANSFORM (170)

RECONSTRUCTED FRAME (190) ← SAMPLE ADAPTIVE OFFSET UNIT (182) ← DE-BLOCKING UNIT (180) ← INVERSE INTRA-PREDICTION UNIT (172) ← INTRA

REFERENCE FRAME (185) → MOTION COMPENSATOR (175) ← INTER

150

# FIG. 1C

```
                                                              ╱ 100
                                                           ↙

        ╱ 111              ╱ 120              ╱ 122
  ┌─────────────┐    ┌─────────────┐    ┌─────────────┐
→ │UNIFIED INTRA-│ →  │  TRANSFORM  │ →  │  QUANTIZER  │ →
  │ PREDICTION  │    │             │    │             │
  └─────────────┘    └─────────────┘    └─────────────┘
   MxN                MxN                MxN                MxN
   BLOCK              PREDICTION         TRANSFORM          QUANTIZED
                      ERROR RESIDUE      COEFFICIENT        TRANSFORM
                      BLOCK              BLOCK              COEFFICIENT
                                                           BLOCK
```

FIG. 2

FIG. 3A

FIG. 3B

FIG. 3C

FIG. 4A

FIG. 4B

FIG. 4C

FIG. 4D

FIG. 5

pred(X) = ( (32−d)*A + d*B + 16) > > 5

FIG. 6

d < 16

601 603 602

A B

X 604

600

d ≥ 16

601 603 602

A B

X 604

FIG. 7

FIG. 8A

FIG. 8B

810

FIG. 9

900

START

IS BLOCK TYPE
OF VIDEO BLOCK INTRA
BLOCK COPY? 901

NO

YES

IS SIZE OF
TRANSFORM BLOCK OF THE
VIDEO BLOCK 4 x 4? 903

NO

YES 905

APPLY DISCRETE COSINE
TRANSFORM TO THE VIDEO BLOCK 907

APPLY DISCRETE SINE
TRANSFORM TO THE VIDEO BLOCK

END

## FIG. 10

1000

```
        ┌─────────┐
        │  START  │
        └─────────┘
             │
             ▼
┌───────────────────────────────┐
│ IDENTIFY DIRECTIONAL INTRA PREDICTION │── 1001
│   MODE WITH PREDICTION ANGLE   │
└───────────────────────────────┘
             │
             ▼
┌───────────────────────────────┐
│  IDENTIFY FIRST AND SECOND REFERENCE │── 1003
│   NEIBORING SAMPLES IN VIDEO BLOCK   │
│      ALONG THE PREDICTION ANGLE      │
└───────────────────────────────┘
             │
             ▼
┌───────────────────────────────┐
│  DETERMINE WHICH OF FIRST AND SECOND │── 1005
│    REFERENCE NEIBORING SAMPLES IS    │
│      NEAREST THE PREDICTION ANGLE    │
└───────────────────────────────┘
             │
             ▼
┌───────────────────────────────┐
│    APPLY VALUE OF NEAREST REFERENCE  │── 1007
│  NEIBORING SAMPLE TO PIXEL AS PREDICTOR │
└───────────────────────────────┘
             │
             ▼
        ┌─────────┐
        │   END   │
        └─────────┘
```

FIG. 11

FIG. 12

1200

START

CALCULATE VARIANCE OF REFERENCE
NEIGHBORING SAMPLES OUTSIDE UPPER
OR LEFT EDGES OF CURRENT BLOCK

1201

VARIANCE > THRESHOLD ?

1203

NO

YES

USE BILINEAR INTERPOLATION
AS PREDICTION METHOD

1207

USE NEAREST NEIBORING
INTERPOLATION AS PREDICTION METHOD

1205

END

FIG. 13

1300

START

1301

CALCULATE DISTANCE BETWEEN
TWO REFERENCE PIXELS

1303

DISTANCE < THRESHOLD ?

NO

YES    1305

1307

USE BILINEAR INTERPOLATION
AS PREDICTION METHOD

USE NEAREST NEIBORING
INTERPOLATION AS PREDICTION METHOD

END

## INTERNATIONAL SEARCH REPORT

| | International application No. |
|---|---|
| | **PCT/KR2014/006405** |

| A. CLASSIFICATION OF SUBJECT MATTER |
|---|
| *H04N 19/573(2014.01)i, H04N 19/129(2014.01)i, H04N 19/59(2014.01)i* |
| According to International Patent Classification (IPC) or to both national classification and IPC |

| B. FIELDS SEARCHED |
|---|
| Minimum documentation searched (classification system followed by classification symbols) |
| H04N 19/573; H04N 7/34; H04N 7/30; H04N 7/26; H04N 19/129; H04N 19/59 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: intra, prediction, predicted angle, reference, adjacency, direction, diagonal line |

| C. DOCUMENTS CONSIDERED TO BE RELEVANT | | |
|---|---|---|
| Category* | Citation of document, with indication, where appropriate, of the relevant passages | Relevant to claim No. |
| X<br>Y<br>A | WO 2011-145862 A2 (LG ELECTRONICS INC.) 24 November 2011<br>See paragraphs [0034]-[0139]; figures 3, 5, 13, 18, 29; and claim 1. | 1,3-5,10,12-14<br><br>8-9<br>2,6-7,11,15 |
| Y | WO 2012-092282 A1 (QUALCOMM INCORPORATED) 05 July 2012<br>See paragraph [0037]. | 8-9 |
| A | KR 10-2013-0027975 A (KT CORPORATION) 18 March 2013<br>See paragraphs [0205]-[0218]; and figure 13. | 1-15 |
| A | KR 10-2012-0070536 A (ELECTRONICS AND TELECOMMUNICATIONS RESEARCH INSTITUTE) 29 June 2012<br>See paragraphs [0040]-[0159]; and figure 13. | 1-15 |
| A | KR 10-2012-0003406 A (HUMAX CO., LTD.) 10 January 2012<br>See paragraphs [0025]-[0050]; and figure 6. | 1-15 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 OCTOBER 2014 (21.10.2014) | **22 OCTOBER 2014 (22.10.2014)** |
| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br>Telephone No. |

Form PCT/ISA/210 (second sheet) (July 2009)

INTERNATIONAL SEARCH REPORT
Information on patent family members

International application No.

**PCT/KR2014/006405**

| Patent document cited in search report | Publication date | Patent family member | Publication date |
|---|---|---|---|
| WO 2011-145862 A2 | 24/11/2011 | CN 102972028 A | 13/03/2013 |
| | | EP 2388999 A2 | 23/11/2011 |
| | | EP 2388999 A3 | 23/01/2013 |
| | | KR 10-2013-0109963 A | 08/10/2013 |
| | | US 2011-280304 A1 | 17/11/2011 |
| | | WO 2011-145862 A3 | 08/03/2012 |
| WO 2012-092282 A1 | 05/07/2012 | CN 103329523 A | 25/09/2013 |
| | | EP 2659678 A1 | 06/11/2013 |
| | | JP 2014-504820 A | 24/02/2014 |
| | | KR 10-2013-0119463 A | 31/10/2013 |
| | | US 2012-0170649 A1 | 05/07/2012 |
| KR 10-2013-0027975 A | 18/03/2013 | NONE | |
| KR 10-2012-0070536 A | 29/06/2012 | CN 103380622 A | 30/10/2013 |
| | | EP 2658262 A2 | 30/10/2013 |
| | | JP 2014-501092 A | 16/01/2014 |
| | | KR 10-2012-0070479 A | 29/06/2012 |
| | | KR 10-2013-0106340 A | 27/09/2013 |
| | | KR 10-2013-0110124 A | 08/10/2013 |
| | | KR 10-2013-0110125 A | 08/10/2013 |
| | | US 2013-0243087 A1 | 19/09/2013 |
| | | WO 2012-087035 A2 | 28/06/2012 |
| | | WO 2012-087035 A3 | 07/09/2012 |
| KR 10-2012-0003406 A | 10/01/2012 | KR 10-1292093 B1 | 08/08/2013 |
| | | WO 2012-002785 A2 | 05/01/2012 |
| | | WO 2012-002785 A3 | 12/04/2012 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. FLYNN ; J. SOLE ; T. SUZUKI.** HEVC range extensions draft 3. *JCTVC-M1005, Incheon, South Korea,* April 2013
- **M. ZHOU.** AHG22: Sample-based angular prediction (SAP) for HEVC lossless coding. *JCTVC-G093, Geneva, Switzerland,* November 2011
- **M. ZHOU ; M. BUDAGAVI.** RCE2: Experimental results on Test 3 and Test 4. *JCTVC-M0056, Incheon, Korea,* April 2013
- **R. JOSHI ; P. AMON ; R. COHEN ; S. LEE ; M. NACCARI.** HEVC Range Extensions Core Experiment 2 (RCE2): Prediction and coding techniques for transform-skip and transform-bypass blocks. *JCTVC-M1122, Incheon, Korea,* April 2013

- **R. JOSHI ; J. SOLE ; M. KARCZEWICZ.** AHG8: Residual DPCM for visually lossless coding. *JCTVC-M0351, Incheon, Korea,* April 2013
- **R. JOSHI ; J. SOLE ; M. KARCZEWICZ.** Non-RCE2: Extension of residual DPCM for lossless coding. *JCTVC-M0288, Incheon, Korea,* April 2013
- **W. PU ; W. S. KIM ; J. CHEN ; K. RAPAKA ; L. GUO ; J. SOLE ; M. KARCZEWICZ.** Non RCE1: Inter Color Component Residual Prediction. *JCTVC-N0266, Vienna, Austria,* July 2013